# EUROPEAN PATENT SPECIFICATION

(11) **EP 3 525 570 B1**
(45) Date of publication and mention of the grant of the patent: **27.04.2022**
(21) Application number: 16918748.1
(22) Date of filing: 14.10.2016
(51) Int. Cl.: A01D 34/90, A01D 34/416

(54) **LINE TRIMMER**
FADENSCHNEIDER
TAILLE-BORDURE

(43) Date of publication of application: 21.08.2019
(60) Divisional application: 21164965.2
(73) Proprietor: Techtronic Outdoor Products Technology Limited, Hamilton HM12 (BM)
(72) Inventor: LIN, Hui, Dongguan Guangdong 523960 (CN); PENG, Zhi Gang, Dongguan Guangdong 523960 (CN); LAM, Kwok Fan, Hong Kong (CN)
(74) Representative: Novagraaf Group
(86) International application number: PCT/CN2016/102197
(87) International publication number: WO 2018/068324

(56) References cited:
- EP-B1- 2 281 430
- CN-A- 104 564 939
- CN-A- 104 798 526
- CN-U- 202 285 568
- CN-U- 204 860 062
- CN-U- 204 860 062
- GB-A- 2 026 928
- JP-A- 2007 225 054
- JP-A- 2007 225 054
- US-A- 4 932 622
- US-A1- 2015 139 717
- US-A1- 2016 201 706

## Description

### FIELD OF THE INVENTION

The present invention relates to a line trimmer. More specifically, the present invention relates to a line trimmer with one or more different features.

### BACKGROUND

Line trimmers, sometimes commonly-referred to as "weed wackers", are used for the trimming and sometimes the edging of lawns, light foliage, and their respective boundaries. Line trimmers typically employ a flexible nylon (or other plastic) cutting line connected to a rotating head which rotates at a high rate of speed so as to cut the vegetation. Such line trimmers may contain either an electric-powered or gas-powered engine which powers the rotating head either directly or indirectly.

Recently, additional features have been included in such line trimmers, such as replaceable heads, auto-feeding heads, telescoping handles, pivoting heads, and the like. Current telescoping heads require the turning of a screw, wing nut, or other type of screw-type device which holds a pole formed of concentric tubes in place via friction caused by the screw against a portion of the inner pole. However, it has been found that such mechanisms may be difficult /complicated to assemble, requiring multiple screws and parts. Such a mechanism may also be difficult for certain users, especially by those having small hands, and/or arthritic users, and it is often unclear whether or not the screw(s) has been tightened enough. If it/they are not tightened enough, then the cutting head may move during use which could be dangerous to the user or others nearby.

JP 2007 225054 A shows a telescopic pipe, wherein a small-diameter pipe can be unmovably locked to a large-diameter pipe with a lever turned either in one direction or in the opposite direction. When the lever is in a neutral condition, a key is not thrust against the small-diameter pipe and the small-diameter pipe is in a telescopic condition relative to the large-diameter pipe. When the lever is turned to one side, a diameter-enlarged portion on one side of an eccentric cam pushes the key. Then, the key is pushed against the outer peripheral face of the small-diameter pipe to lock the small-diameter pipe. When the lever is rotated to the other side, a diameter-enlarged portion on the other side of the eccentric cam pushes the key. Then, the key is pushed against the outer peripheral face of the small-diameter pipe to lock the small-diameter pipe.

Some line trimmers contain a rotating head to allow the trimmer to also be used as an edging tool for the boundaries of grass or foliage. For example, to cut grass at the edges of a sidewalk, drive-way, etc. Such a line trimmer often contains a rotating head, only. However, it has been found that the mechanisms for such a rotating head are often complicated and difficult to use, and/or confusing to the user. Or, the user is instructed to employ a pivoting head, and then to rotate the line trimmer along its pole axis to use it as an edging tool. Such a situation could be dangerous, as the line trimmer may be unwieldy when turned in such a manner.

Line trimmers typically contain safety features which protect the user from grass, foliage, sticks, rocks, etc. that are kicked up by the rapidly rotating cutting line. A typical safety feature is therefore a tool guard which is often a circular or semi-circular (i.e., arc- shaped) shield attached above the cutting line which physically blocks flying debris from hitting the user. This tool guard may completely or partially-cover the cutting line. Such tool guards are typically permanently-affixed to the motor housing at various places with, for example, permanent adhesives, screws, etc. In an alternative, the tool guard may be permanently moulded into the engine housing. However, such a complicated manufacturing requires either significant effort and time during manufacturing and/or a specialized mould which makes maintenance much more difficult.

Accordingly, it has been found that there remains a need for an improved mechanism for providing a lockable, telescoping tube.

### SUMMARY OF THE INVENTION

An embodiment of the present invention relates to a lockable, telescoping tube having an outer tube, an inner tube, a friction block and a pressure latch. The outer tube has an outer tube first end, also referred to as proximal outer tube end and an outer tube second end, also referred to as distal outer tube end opposite the outer tube first end. The inner tube has an inner tube first end, also referred to as proximal inner tube end and an inner tube second end, also referred to as distal inner tube end opposite the inner tube first end. The inner tube first end is slidably-inserted into the outer tube first end. A lower coupler is external to the outer tube first end. A shaft shield is attached to the inner tube first end via a snap-fit closure, and the shaft shield is slidably-inserted into both the outer tube first end and a lower coupler. An upper coupler is external to the inner tube. The shaft shield is physically blocked from passing into the upper coupler. The upper coupler is affixed to the lower coupler via a snap-fit closure, and the upper coupler is also affixed to the outer tube first end via a snap-fit closure. A pivot axis connects the upper coupler and the lower coupler. The friction block protrudes from the upper coupler and/or the lower coupler. The friction block is also releasably-pressable against the inner tube. The pressure latch at least partially encloses the pivot axis. When the pressure latch is closed it physically presses the friction block against the inner tube so as to restrict movement of the inner tube. When the pressure latch is open the friction block releases pressure from the inner tube thereby allowing the inner tube to slidably-move.

Without intending to be limited by theory, it is believed that such a telescoping tube is both quick and easy to manufacture, due to the snap-fit-closures. Furthermore, it is believed that when the pressure latch is closed, the pressure latch sufficiently presses the friction block so as to substantially prevent sliding of the inner tube within the outer tube. However, when the pressure lock is open, the friction block does not significantly press against the inner tube and therefor the inner tube may easily slide within the outer tube.

An example relates to a trimming tool having a pole, a trimmer head, and a tool guard with a snap-fit fastener. The pole contains a distal pole end having a handle, and a proximal pole end opposite the handle. The trimmer head contains an electric motor, a cutting tool operatively-connected to the electric motor, and a housing surrounding the electric motor. The trimmer head is attached to the proximal end of the pole, and the tool guard is attached to the trimmer head via the snap-fit fastener.

An example relates to a method for attaching a tool guard to a trimming tool having the steps of providing a trimming tool having a trimmer head having a housing, and wherein the housing has a clip, providing a tool guard having a fixture hole, and affixing the tool guard to the housing by inserting the clip into the fixture hole.

Without intending to be limited by theory, it is believed that the example allows for the quick and easy attachment of a tool guard to a trimming tool with minimal or even no attachment tools. Such a tool guard may be securely attached thereby speeding up production.

An example relates to a trimming tool having a pole, a trimmer head, and an adjustment mechanism. The pole contains a distal pole end, a handle at the distal pole end, and a proximal pole end opposite the handle. The pole also contains a pole axis running the length of the pole. The trimmer head has an electric motor, a cutting tool operatively-connected to the electric motor, and a housing surrounding the electric motor. The adjustment mechanism connects the pole to the trimmer head and contains a releasably-lockable rotational mechanism and a releasably-lockable pivoting mechanism. The releasably-lockable rotational mechanism allows the trimmer head to rotate about the pole axis of the pole, and the releasably-lockable pivoting mechanism allows the adjustment of the angle between the trimmer head and the pole.

Without intending to be limited by theory it is believed that such an adjustment mechanism is safer, and easier to use than existing mechanisms. The lockability of both the rotational and pivoting actions helps to prevent accidents.

Additional benefits may also be found with the present invention and/or combinations of the features describe herein.

### BRIEF DESCRIPTION OF THE DRAWINGS

Fig. 1 shows an exploded view of an embodiment of the lockable, telescoping tube of the present invention;
Fig. 2 shows an open configuration of an embodiment of the lockable, telescoping tube of Fig. 1;
Fig. 3 shows a closed configuration of an embodiment of the lockable, telescoping tube of Fig. 1;
Fig. 4 shows a cut-away side view of the pressure latch as seen along line 4-4 in Fig. 1;
Fig. 5 shows a partially-cut-away side view of an example of a trimming tool of the present invention;
Fig. 6 shows a bottom perspective view an example of the housing of the present invention;
Fig. 7 shows a bottom perspective view of an example of the tool guard of the present invention;
Fig. 8 shows a bottom perspective view of an example of the tool guard of the present invention;
Fig. 9 shows a bottom perspective view of an example of the tool guard being attached to the trimmer head of the present invention;
Fig. 10 shows a side view of an example of the pivoting mechanism; and
Fig. 11 shows a top perspective view of an example of the pivoting mechanism and the rotational mechanism.

The figures herein are for illustrative purposes only and are not necessarily drawn to scale.

### DESCRIPTION OF THE PREFERRED EMBODIMENTS

Unless otherwise specifically provided herein, all measurements are made in metric units. Furthermore, all percentages, ratios, etc. herein are by weight, unless specifically indicated otherwise. Unless otherwise specifically indicated, all individual components herein may be fabricated formed/made/constructed of standard materials in known in the art, and according to methods known in the art.

### Lockable, Telescoping Tube

An embodiment of the present invention relates to a lockable, telescoping tube having an outer tube, an inner tube, a friction block and a pressure latch. The outer tube has an outer tube first end, also referred to as proximal outer tube end and an outer tube second end, also referred to as distal outer tube end opposite the outer tube first end. The inner tube has an inner tube first end, also referred to as proximal inner tube end and an inner tube second end, also referred to as distal inner tube end opposite the inner tube first end. The inner tube first end is slidably-inserted into the outer tube first end. A lower coupler is external to the outer tube first end. A shaft shield is attached to the inner tube first end via a snap-fit closure, and the shaft shield is slidably-inserted into both the outer tube first end and a lower coupler. An upper coupler is external to the inner tube. The shaft shield is physically blocked from passing into the upper coupler. The upper coupler is affixed to the lower coupler via a snap-fit closure, and the upper coupler is also affixed to the outer tube first end via a snap-fit closure. A pivot axis connects the upper coupler and the lower coupler. The friction block protrudes from the upper coupler and/or the lower coupler. The friction block is also releasably-pressable against the inner tube. The pressure latch at least partially encloses the pivot axis. When the pressure latch is closed it physically presses the friction block against the inner tube so as to restrict movement of the inner tube. When the pressure latch is open the friction block releases pressure from the inner tube thereby allowing the inner tube to slidably-move.

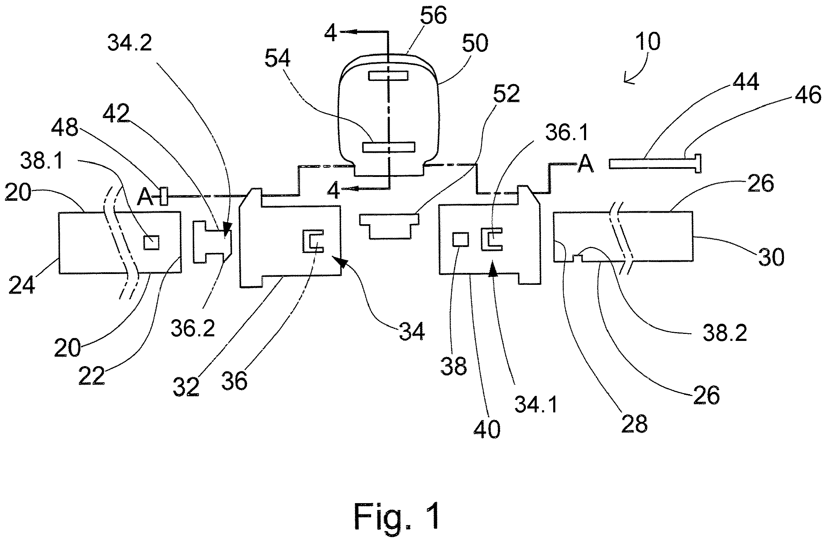

Turning to the figures, Fig. 1 shows an exploded view of an embodiment of the lockable, telescoping tube, 10, of the present invention. The lockable, telescoping tube, 10, contains an outer tube, 20, having an outer tube first end 22, also referred to as proximal outer tube end and an outer tube second end 24, also referred to as distal outer tube end, opposite the outer tube first end, 22. The lockable, telescoping tube, 10, also contains an inner tube, 26 which has an inner tube first end 28, also referred to as proximal inner tube end and an inner tube second end 30, also referred to as distal inner tube end, opposite the inner tube first end, 28.

The inner tube, 20, and the outer tube, 26, are typically made from, for example, a metal, a plastic, or a combination thereof; or a metal; or steel, or aluminum. The inner tube is typically smaller in diameter than the outer tube and is therefore slidably-insertable into the outer tube. The inner tube and the outer tube typically have a round; or substantially round cross-sectional shape. If the inner tube and outer tube do not both have a round cross-sectional shape, then the inner tube typically has a similar cross-sectional shape and is slidably-insertable into the outer tube. In an embodiment herein, the outer tube and/or the inner tube contains a ridge or other shape so as to prevent rotation and/or twisting of the two tubes relative to each other.

In Fig. 1, the inner tube first end, 28, is slidably-inserted into the outer tube first end, 22. A lower coupler, 32, is external to the inner tube first end, 28, and the inner tube first end, 28, is also slidably-inserted the lower coupler, 32. The lower coupler, 32, contains a snap-fit closure, 34. In Fig. 1, the snap-fit closure, 34, is formed from a tab, 36, on the lower coupler, 32, which snaps into a fixture hole, 38, on an upper coupler, 40. The upper coupler, 40, therefore partially fits into the lower coupler, 32. The upper coupler, 40, further contains another snap-fit closure, 34.1, containing a tab, 36.1, which fits into a fixture hole, 38.1, near the outer tube first end, 22. When the outer tube first end, 22, is inserted into the upper coupler, 40, the tab, 36.1, snaps into the fixture hole, 38.1, thereby securely fastening the upper coupler, 40, to the outer tube, 20. Thus, the upper coupler, 40, is attached to both the outer tube, 20, and the lower coupler, 32, via snap-fit closures, 34, 34.1. Once assembled, the outer tube, 20, is typically intended to be permanently-fastened to the upper coupler, 40, and the upper coupler, 40, is intended to be permanently-fastened to the lower coupler, 32. Thus, these three parts typically may not be separated unless one or more of the tabs, 36, 36.1, is broken.

The upper coupler, 40, is external to at least a portion of the inner tube, 26, typically the inner tube end, 28. In an embodiment herein, the lower coupler, 32, is external to the upper coupler, 40, the outer tube first end, 22, and the inner tube, 26, and typically the inner tube first end, 28.

A shaft shield, 42, is attached to the inner tube first end, 28 via a snap-fit closure, 34.2. The tab, 36.2, on the shaft shield, 42, fits into a fixture hole, 38.2, near the inner tube first end, 28. The shaft shield, 42, is slidably-inserted into both the inner tube first end, 28, and the lower coupler, 32. The tab, 36.2, on the shaft shield, 42, is intended to permanently-fasten the shaft shield, 42, to the inner tube first end, 28. Thus, these two parts typically may not be separated unless the tab, 36.2, is broken.

The lower coupler, 32 is also external to the shaft shield, 42. Accordingly in the embodiment of Fig. 1, going from the outside to the inside, one would encounter in order, the lower coupler, 32, as the outermost piece, the upper coupler, 40, the outer tube, 20, inner tube, 26, and finally the shaft shield, 42 as the innermost piece.

A pivot axis, 44, connects the upper coupler, 40, and the lower coupler, 32. In the embodiment of Fig. 1, the pivot axis is a screw, 46, which is fastened with a nut, 48, through the upper coupler, 40, a pressure latch, 50, and then through the lower coupler, 32, as seen along line A-A. The pressure latch, 50, at least partially encloses; or substantially encloses; or encloses; the pivot axis, 44. The pivot axis allows the pressure latch, 50, to rotate open and closed.

A friction block, 52, is provided and protrudes from the upper coupler, 40, and/or the lower coupler, 32. The friction block, 52, is releasably-pressable against the inner tube, 26, to prevent it from moving. Specifically, in Fig. 1, when the pressure latch, 50, is closed, then a protrusion, 54, on the pressure latch, 50, physically presses the friction block, 52, against the inner tube, 26 and thereby restricts the movement of the inner tube, 26, preventing it from moving relative to the outer tube, 20, the lower coupler, 32, the upper coupler, 40, the pressure latch, 50, and the friction block, 54. However, when the pressure latch, 50, is open, then the protrusion, 54, does not press against the friction block, 52, and therefore the friction block, 52, releases the pressure from the inner tube, 26, allowing it to slidable-move relative to the outer tube, 20, the lower coupler, 32, the upper coupler, 40, the pressure latch, 50, and the friction block, 54. This moving of the inner tube, 26, relative to the outer tube, 20, allows the total length of the two (inner and outer) tubes to expand or contract, which defines a telescoping tube.

The pressure latch, 50, further contains a finger tab, 56, which allows the user to easily lift the pressure latch, 50, when it is closed, so as to open the pressure latch, 50.

Without intending to be limited by theory, it is believed that this type of pressure latch is more easily opened and closed than a screw-type or wing-nut type of pressure fastener. Therefore, it is believe that the mechanism herein described is significantly easier for the user, especially an arthritic user, to use as the leverage is easier to apply as compared to a turning screw. Furthermore, it is believed that a user easily understands when such a mechanism is completely locked and the tubes are firmly locked together, as compared to a screw-type mechanism.

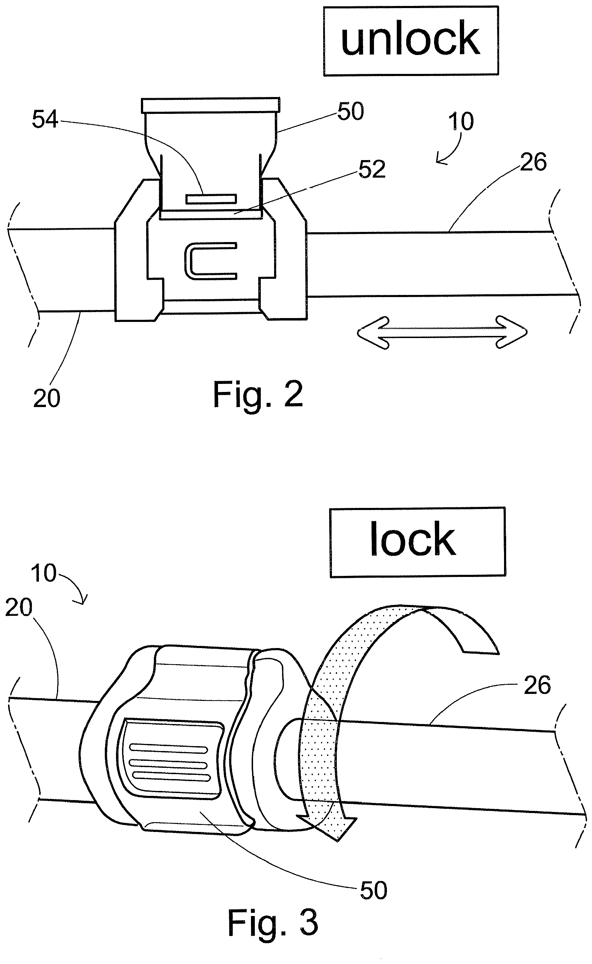

Fig. 2 shows an open and unlocked configuration of an embodiment of the lockable, telescoping tube, 10, of Fig. 1. As can be seen, when the pressure latch, 50, is open then the protrusion, 54, does not touch the friction block, 52. This releases the pressure on the inner tube, 26, and allows the inner tube, 26, to slidably-move relative to the outer tube, 20, in the direction of the arrow.

Fig. 3 shows a closed and locked configuration of an embodiment of the lockable, telescoping tube, 10, of Fig. 1 When the pressure latch, 50, is closed and therefore in a locked position, the protrusion (see Fig. 2 at 54) presses against the friction block (see Fig. 2 at 52) and prevents the inner tube, 26, from slidably-moving relative to the outer tube, 20.

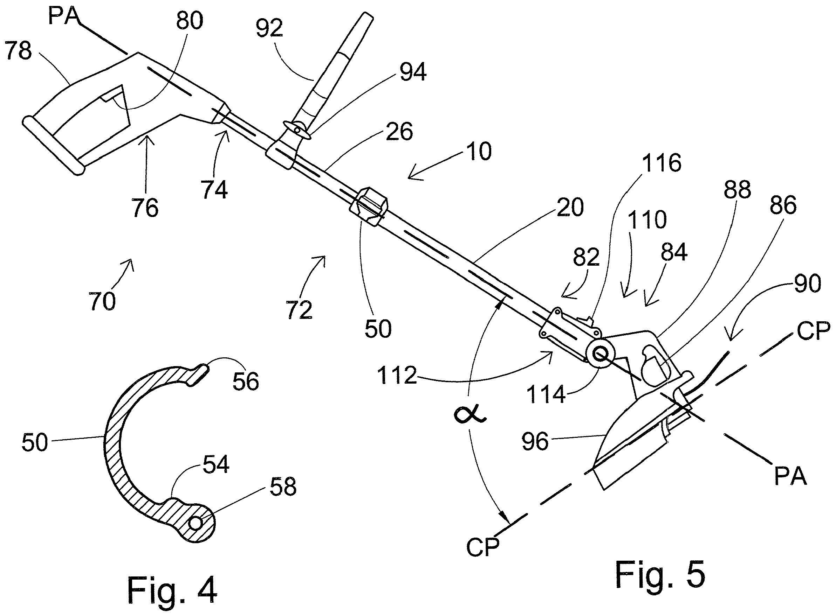

Fig. 4 shows a cut-away side view of the pressure latch, 50, as seen along line 4-4 in Fig. 1. The pressure latch, 50, contains a protrusion, 54, as well as a finger tab, 56, at one end of the pressure latch, 50. At the opposite end of the pressure latch, 50, from the finger tab, 56, is a latch hole, 58, through which the pivot axis (see Fig 1 at 44) , extends. When the pressure latch, 50, is rotated from being closed to being open, the axis of rotation is along the latch hole, 58 and the pivot axis (see Fig. 1 at 44).

### Trimming Tool

An example relates to a trimming tool having a pole, a trimmer head, and a tool guard. The pole contains a distal pole end having a handle, and a proximate pole end opposite the handle. The trimmer head contains an electric motor, a cutting tool operatively-connected to the electric motor, and a housing surrounding the electric motor. The trimmer head is connected to the proximal pole end. The tool guard has a snap-fit fastener and the tool guard is attached to the trimmer head via the snap-fit fastener.

Fig. 5 shows a partially-cut-away side view of an example of a trimming tool, 70. The trimming tool, 70, has a pole, 72, which in this example is a lockable, telescoping tube, 10. The pole, 72, contains a distal pole end, 74, to which is attached a handle, 76. The handle, 76, contains a handle grip, 78, with which the user holds the trimming tool, 70. The handle grip, 78, also contains a trigger, 80, which activates the trimming tool, 70.

The pole, 70, also contains a proximal pole end, 82, opposite the distal pole end, 74, and the handle, 76. A trimmer head, 84, is attached to the proximal pole end, 82. The trimmer head, 84, contains an electric motor, 86, therein. The trimmer head, 84 contains a housing, 88, which surrounds the electric motor, 86. Furthermore, a cutting tool, 90, is operatively-connected to the electric motor, 86. In an example herein, the cutting tool is a line, such as a plastic line, a nylon line, a metal wire; or a plastic line; or a nylon line.

The pole, 70, contains the outer tube, 20, the inner tube, 26, and the pressure latch, 50, as previously-described. In addition, an optional auxiliary handle, 92, is attached to the pole, 72, via a knob, 94. The knob, 94, is typically adjustable, such as via an optional wing nut or a finger nut, which allows the user to adjust the angle of the auxiliary handle, 92, to suit the user's preference, height, etc. The auxiliary handle may be either removable from the pole, or may be permanently-attached to the pole. Furthermore, the position of the auxiliary handle on the pole may be either adjustable, or fixed.

Fig. 5 also shows a tool guard, 96, attached to the trimmer head, 84, and in this case is attached to the housing, 84. The tool guard is intended to protect the user from items such as grass, twigs, rocks, and other debris which may be kicked up by the cutting tool. The tool guard, the housing, and the trimmer head is typically formed of a plastic, a resin, or other material which is easily formed and/or moulded into complex shapes.

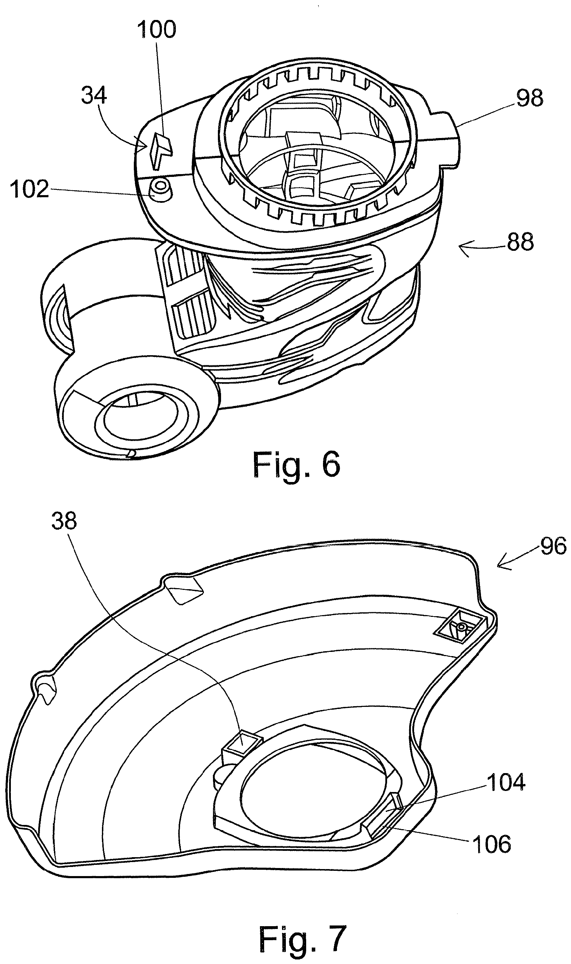

Fig. 6 shows a bottom perspective view of an example of the housing, 88, having a buckle, 98. The buckle, 98, protrudes from the housing, 88, and helps to secure the tool guard (see Figs. 5, 7 at 96) in place. The housing, 88, further contains a snap-fit closure, 34, which consists of a clip, 100, which protrudes from the housing, and a fixture hole (See Fig. 7 at 38). The housing, 88, also contains an assist boss, 102, which helps to align the tool guard (see Figs. 5, 7 at 96) thereupon.

Fig. 7 shows a bottom perspective view of an example of the tool guard, 96, useful herein. The tool guard, 96, contains a buckle hole, 104, through which the buckle (see Fig. 6 at 98) is inserted. The tool guard further contains a fixture hole, 38, through which the clip (see Fig. 6 at 100) is inserted so as to lock; or securely lock, the tool guard, 96, in place. The tool guard, 96, further contains a rubber block, 106, at the buckle hole, 104, to provide a more secure closure, In an example, the rubber block also helps to reduce vibrations and/or noise during use. In the example in Fig. 7, the trimmer head (see Fig. 5 at 84); or the housing (see Fig. 6 at 88) is attached to the tool guard, 96, without any screws or rivets.

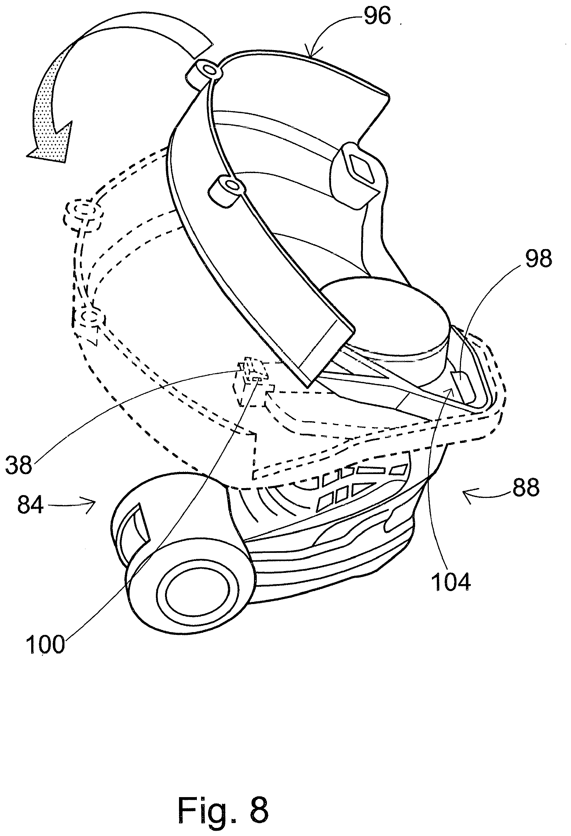

Fig. 8 shows a bottom perspective view of an example of the tool guard, 96, and trimmer head, 88, of the present invention. As can be seen, during assembly the buckle, 98, is inserted into the buckle hole, 104, and then the tool guard, 96, is rotated towards the trimmer head, 84, such that the clip, 100, snaps into the fixture hole, 38, to lock the tool guard, 96, into place.

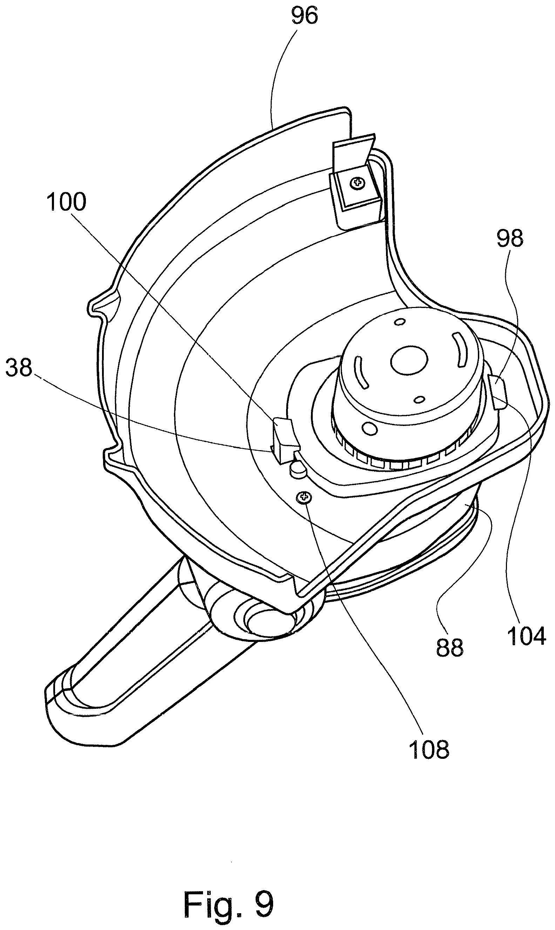

Fig. 9 shows a bottom perspective view of an example of the tool guard, 96, attached to the trimmer head, 88. The buckle, 98 can be seen protruding from the buckle hole, 104, and the clip, 100, can be seen protruding from the fixture hole, 38, and thereby securing the tool guard, 96, in place. In addition, an optional screw, 108, can be seen further securing the tool guard, 96, to the trimmer head, 88. In an example, a screw; or two or more screws, is used to attach the tool guard to the trimmer head. In an example, the trimmer head is attached to the tool guard with only the snap-fit fastener and a single screw.

In an example herein, the invention includes a method of attaching a tool guard to a trimming tool by providing a trimming tool having a trimmer head, and providing a tool guard comprising a fixture hole. The trimmer head has a housing, and the housing has a clip. The tool guard is affixed to the housing by inserting the clip into the fixture hole. Together, the clip and the fixture hole form a snap-fit closure.

In an example herein, the invention includes a method of attaching a tool guard to a trimming tool by providing a trimming tool having a trimmer head, and providing a tool guard comprising a clip. The trimmer head has a housing, and the housing has a fixture hole. The tool guard is affixed to the housing by inserting the clip into the fixture hole. Together, the clip and the fixture hole form a snap-fit closure.

In an example of the method herein, the housing further contains a buckle, and the tool guard further contains a buckle hole. The buckle is inserted into the buckle hole, prior to inserting the clip into the fixture hole.

### Rotatable Trimmer Head:

An example of the trimming tool herein contains a pole, a trimmer head, and an adjustment mechanism. The pole contains a distal pole end, a handle at the distal pole end, and a proximal pole end opposite the handle and the distal pole end. The pole has a pole axis running the length of the pole. The trimmer head has an electric motor, a cutting tool operatively-connected to the electric motor, and a housing surrounding the electric motor. The adjustment mechanism connects the pole to the trimmer head, and the adjustment mechanism has a releasably-lockable rotational mechanism and a releasably-lockable pivoting mechanism. The releasably-lockable rotational mechanism allows the trimmer head to rotate about the pole axis of the pole, and the releasably-lockable pivoting mechanism allows adjustment of the angle between the trimmer head and the pole.

In an example herein, the pole contains the locking, telescoping tube described herein.

In Fig. 5, the pole has a pole axis, PA, and the cutting tool, 90, defines a cutting plane, CP. The angle, alpha, is the angle between the pole axis, PA, and the cutting plane, CP. An adjustment mechanism, 110, contains a releasably-lockable rotational mechanism, 112, and a releasably-lockable pivoting mechanism, 114. An adjustment switch, 116, allows the user to unlock the rotational mechanism and/or the pivoting mechanism. Without intending to be limited by theory, it is believed that the adjustment switch herein allows a normal trimming tool to be converted into an edging tool. As one skilled in the art understands, a trimming tool is used to cut grass, foliage, etc. when the cutting tool is roughly parallel to the ground. In contrast, an edging tool is used to cut grass, foliage, etc. when the cutting tool is roughly perpendicular to the ground, such as around the edge of sidewalks, etc. Thus, it is believed that the present invention allows a single trimming tool to be used for multiple purposes in a safe and reliable manner.

In an example herein, the adjustment switch is locked while the cutting tool is in use, and will not unlock the rotational mechanism or the pivoting mechanism while the cutting tool and/or the electric motor is in use. In an example herein, when the adjustment switch is activated, the cutting tool and/or the electric motor are deactivated.

In an example herein, the adjustment switch, 116, releases the lock of the rotational mechanism, 112, to allow the user to rotate the trimmer head, 84, relative to the pole, 72, around the pole axis, PA.

In an example herein, the adjustment switch, 116, releases the lock of the pivoting mechanism, 114, to allow the trimmer head, 84, to pivot and thereby adjust the angle, alpha, between the pole axis, PA, and the cutting plane, CP.

In an example herein, alpha, is less than about 90 degrees, or less than about 75 degrees; or from about 75 to about 0 degrees; or from about 60 degrees to about 0 degrees; or from about 60 degrees to about 15 degrees; or from about 50 degrees to about 0 degrees; or from about 50 degrees to about 25 degrees, when in trimming mode; i.e., when the cutting tool is intended to be used parallel to the ground. In an example herein, alpha, is about 0 degrees; or the cutting plane is parallel to the pole axis, PA, when the cutting tool is in edging mode; i.e., when the cutting tool is intended to be used perpendicular to the ground. Thus, in an example, alpha is from about 75 degrees to 0 degrees; or from about 60 degrees to about 0 degrees; or from about 50 degrees to about 0 degrees total.

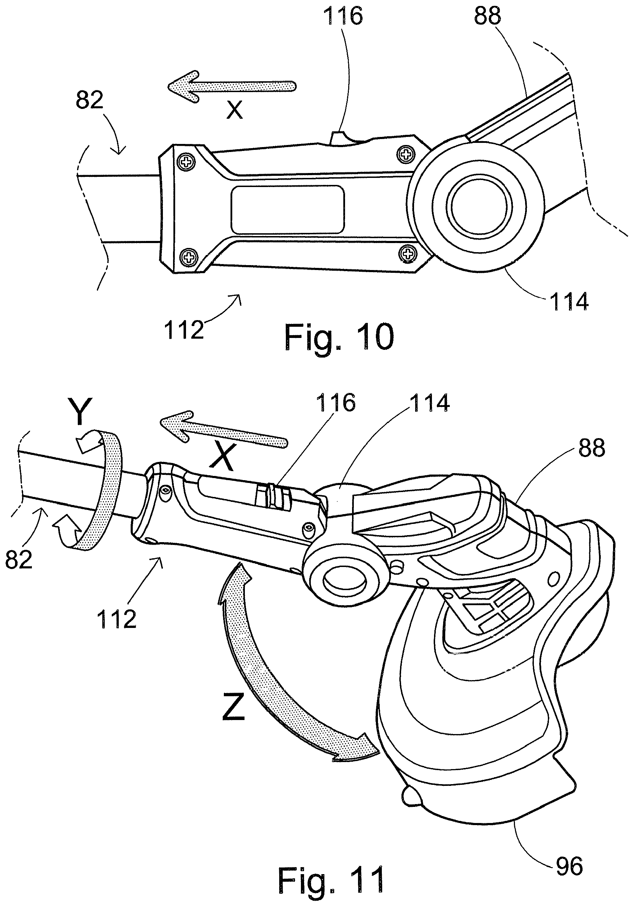

Fig. 10 shows a side view of an example of the pivoting mechanism useful herein. The adjustment switch, 116, is a biased switch that locks and unlocks both the rotational mechanism, 112, and the pivoting mechanism, 114 in place. When the adjustment switch, 116, is untouched, it is biased towards the locked position. When the adjustment switch, 116, is displaced in the direction of the arrow, X, then the (internal) lock disengages and the rotational mechanism, 112, is free to rotate about the proximal pole end, 82. At the same time, the pivoting mechanism, 114, is also disengaged/unlocked, and the housing, 88, is free to pivot back and forth. When the adjustment switch, 116, is released, then it automatically returns to its biased position, and both the rotational mechanism, 112, and the pivoting mechanism, 114, are again safely locked in place.

In an example herein, the adjustment switch unlocks/locks both the rotational mechanism and the pivoting mechanism.

In an example herein, the adjustment switch contains a separate rotational mechanism switch and a pivoting mechanism switch. In such an example, the rotational adjustment switch locks and unlocks the rotational adjustment mechanism and the pivoting mechanism switch locks and unlocks the pivoting mechanism.

Fig. 11 shows a top perspective view of an example of the pivoting mechanism, 114, and the rotational mechanism, 112. As noted above for Fig. 10, when the adjustment switch, 116, is untouched, it is biased towards the locked position. When the adjustment switch, 116, is displaced, for example, by the user's finger, in the direction of the arrow, X, then the (internal) lock disengages and the rotational mechanism, 112, is free to rotate about the proximal pole end, 82, in the direction of the arrow, Y. The exact construction of the (internal) rotational mechanism, adjustment switch, and locking/unlocking of the rotational mechanism is not particularly important, as one skilled in the art understands the multiple manners in which such mechanisms may be constructed. It is understood that the rotational mechanism may have a plurality of fixed positions, or may rotate to any number of positions, as desired.

At the same time, when the adjustment switch, 116, is displaced in the direction of the arrow, X, then the (internal) lock disengages and the pivoting mechanism, 114, is also disengaged/unlocked, and the housing, 88, with the attached tool guard, 96, is free to pivot back and forth in the direction of the arrow, Z. This pivoting motion back and forth along the arrow, Z, increases or decreases the angle, a, seen in Fig. 5. In this example, when the adjustment switch, 116, is released, then it automatically returns to its biased position, and both the rotational mechanism, 112, and the pivoting mechanism, 114, are again safely locked in place. The exact construction of the (internal) pivoting mechanism, adjustment switch, and locking/unlocking of the pivoting mechanism is not particularly important, as one skilled in the art understands the multiple manners in which such mechanisms may be constructed. It is understood that the pivoting mechanism may have a plurality of fixed positions, or may pivot to any number of positions, as desired.

In an example herein, the electric motor is engageable only when both the releasably-lockable rotational mechanism and the releasably-lockable pivoting mechanism are locked in place. Such a feature may be either a physical or electrical/software control feature and is intended to prevent accidents and to improve the safety of the trimming tool during use. Such a feature may be provided via various mechanical, electrical and/or software designs as known in the art.

In an example herein, the lockable, telescoping tube herein is combined with the tool guard having a snap-fit fastener herein.

In an example herein, the lockable, telescoping tube herein is combined with the adjustment mechanism herein.

In an example herein, the snap-fit fastener herein is combined with the adjustment mechanism herein.

In an example herein, the lockable, telescoping tube herein is combined with the tool guard having a snap-fit fastener herein and the adjustment mechanism herein.

It should be understood that the above only illustrates and describes examples whereby the present invention may be carried out, and that modifications and/or alterations may be made thereto without departing from the scope of the appended claims.

## Claims

1. A lockable, telescoping tube (10) comprising:
an outer tube (20) comprising an outer tube first end (22) and an outer tube second end (24) opposite the outer tube first end (22);
an inner tube (26) comprising an inner tube first end (28) and an inner tube second end (30) opposite the inner tube first end (28), wherein the inner tube first end (28) is slidably-inserted into the outer tube first end (22);
a friction block (52) and a pivot axis (44);
the friction block (52) protruding from the upper coupler (40) and/or the lower coupler (32), wherein the friction block (52) is releasably-pressable against the inner tube (26); and a pressure latch (50) at least partially enclosing the pivot axis (44), wherein when the pressure latch (50) is closed the pressure latch (50) physically presses the friction block (52) against the inner tube (26) so as to restrict movement of the inner tube (26), and wherein when the pressure latch (50) is open the friction block (52) releases pressure from the inner tube (26) thereby allowing the inner tube (26) to slidably-move;
**characterized in that** the lockable telescopic tube further comprises:
a lower coupler (32) external to the outer tube first end (22);
a shaft shield (42) affixed to the inner tube first end (28) via a snap-fit closure (34.2), wherein the shaft shield (42) is slidably-inserted into both the outer tube first end (22) and
the lower coupler (32);
an upper coupler (40) external to the inner tube (26), wherein the shaft shield (42) is physically blocked from passing into the upper coupler (40), wherein the upper coupler (40) is affixed to the lower coupler (32) via a snap-fit closure (34), and wherein the upper coupler (40) is affixed to the outer tube first end (22) via a snap-fit closure (34.1);
the pivot axis (44) connecting the upper coupler (40) and the lower coupler (32).

2. The lockable, telescoping tube (10) according to Claim 1, wherein the friction block (52) comprises rubber.

3. The lockable, telescoping tube (10) according to any preceding claim, wherein the pressure latch (50) comprises plastic.

4. The lockable, telescoping tube (10) according to any preceding claim, wherein the pressure latch (50) comprises a protrusion (54), wherein the protrusion (54) contacts the friction block (52) when the pressure latch (50) is closed, and wherein the protrusion (54) does not contact the friction block (52) when the pressure latch (50) is open.

5. The lockable, telescoping tube (10) according to any preceding claim, wherein the pressure latch (50) comprises a latch hole (58), and wherein the pivot axis (44) extends through the latch hole (58).

6. The lockable, telescoping tube (10) according to Claim 4, wherein the protrusion (54) presses the friction block (52) when the pressure latch (50) is closed.

7. A trimming tool comprising the lockable, telescoping tube (10) according to any preceding claim, and optionally, wherein the trimming tool is a line trimmer.

## Patentansprüche

1. Verriegelbares Teleskoprohr (10), umfassend:
ein Außenrohr (20), umfassend ein erstes Außenrohrende (22) und ein zweites Außenrohrende (24) gegenüber dem ersten Außenrohrende (22);
ein Innenrohr (26), umfassend ein erstes Innenrohrende (28) und ein zweites Innenrohrende (30) gegenüber dem ersten Innenrohrende (28), wobei das erste Innenrohrende (28) in das erste Außenrohrende (22) verschiebbar eingeführt ist;
einen Reibungsblock (52) und eine Schwenkachse (44);
wobei der Reibungsblock (52) von der oberen Kupplung (40) und/oder der unteren Kupplung (32) hervorsteht, wobei der Reibungsblock (52) gegen das Innenrohr (26) lösbar-einpressbar ist; und wobei eine Druckverriegelung (50) zumindest teilweise die Schwenkachse (44) umschließt, wobei, wenn die Druckverriegelung (50) geschlossen ist, die Druckverriegelung (50) physisch den Reibungsblock (52) gegen das Innenrohr (26) presst, sodass die Bewegung des Innenrohrs (26) eingeschränkt wird, und wobei, wenn die Druckverriegelung (50) geöffnet ist, der Reibungsblock (52) Druck aus dem Innenrohr (26) freisetzt, wodurch ermöglicht wird, dass sich das Innenrohr (26) verschiebbar bewegt;
**dadurch gekennzeichnet, dass** das verriegelbare Teleskoprohr ferner Folgendes umfasst:
eine untere Kupplung (32) außerhalb des ersten Außenrohrendes (22);
eine Wellenblende (42), die an dem ersten Innenrohrende (28) über einen Schnappverschluss (34.2) befestigt ist, wobei die Wellenblende (42) sowohl in das erste Außenrohrende (22) als auch in die untere Kupplung (32) verschiebbar eingeführt wird;
eine obere Kupplung (40) außerhalb des Innenrohrs (26), wobei die Wellenblende (42) physisch daran gehindert ist, in die obere Kupplung (40) einzudringen, wobei die obere Kupplung (40) an der unteren Kupplung (32) über einen Schnappverschluss (34) befestigt ist, und wobei die obere Kupplung (40) an dem ersten Außenrohrende (22) über einen Schnappverschluss (34.1) befestigt ist;
wobei die Schwenkachse (44) die obere Kupplung (40) mit der unteren Kupplung (32) verbindet.

2. Verriegelbares Teleskoprohr (10) nach Anspruch 1, wobei der Reibungsblock (52) Gummi umfasst.

3. Verriegelbares Teleskoprohr (10) nach einem der vorstehenden Ansprüche, wobei die Druckverriegelung (50) Kunststoff umfasst.

4. Verriegelbares Teleskoprohr (10) nach einem der vorstehenden Ansprüche, wobei die Druckverriegelung (50) einen Vorsprung (54) umfasst, wobei der Vorsprung (54) den Reibungsblock (52) berührt, wenn die Druckverriegelung (50) geschlossen ist, und wobei der Vorsprung (54) den Reibungsblock (52) nicht berührt, wenn die Druckverriegelung (50) geöffnet ist.

5. Verriegelbares Teleskoprohr (10) nach einem der vorstehenden Ansprüche, wobei die Druckverriegelung (50) ein Verriegelungsloch (58) umfasst, und wobei sich die Schwenkachse (44) durch das Verriegelungsloch (58) erstreckt.

6. Verriegelbares Teleskoprohr (10) nach Anspruch 4, wobei der Vorsprung (54) den Reibungsblock (52) presst, wenn die Druckverriegelung (50) geschlossen ist.

7. Schneidewerkzeug, umfassend das verriegelbare Teleskoprohr (10) nach einem der vorstehenden Ansprüche, und optional, wobei das Schneidwerkzeug ein Fadenschneider ist.

## Revendications

1. Tube télescopique verrouillable (10) comprenant :
un tube externe (20) comprenant une première extrémité (22) de tube externe et une seconde extrémité (24) de tube externe opposée à la première extrémité (22) de tube externe ;
un tube interne (26) comprenant une première extrémité (28) de tube interne et une seconde extrémité (30) de tube interne opposée à la première extrémité (28) de tube interne, dans lequel la première extrémité (28) de tube interne est insérée de manière coulissante dans la première extrémité (22) de tube externe ;
un bloc de friction (52) et un axe de pivotement (44) ;
le bloc de friction (52) faisant saillie du coupleur supérieur (40) et/ou du coupleur inférieur (32), dans lequel le bloc de friction (52) peut être pressé de manière amovible contre le tube interne (26) ; et un verrou à pression (50) enfermant au moins en partie l'axe de pivotement (44), dans lequel lorsque le verrou à pression (50) est fermé le verrou à pression (50) presse physiquement le bloc de friction (52) contre le tube interne (26) de manière à restreindre le mouvement du tube interne (26), et dans lequel lorsque le verrou à pression (50) est ouvert le bloc de friction (52) libère la pression du tube interne (26) permettant de ce fait au tube interne (26) de se déplacer de manière coulissante ;
**caractérisé en ce que** le tube télescopique verrouillable comprend en outre :
un coupleur inférieur (32) externe à la première extrémité (22) de tube externe ;
un flasque d'arbre (42) fixé à la première extrémité (28) de tube interne par l'intermédiaire d'une fermeture à encliquetage (34.2), dans lequel le flasque d'arbre (42) est inséré de manière coulissante à la fois dans la première extrémité (22) de tube externe et le coupleur inférieur (32) ;
un coupleur supérieur (40) externe au tube interne (26), dans lequel le passage du flasque d'arbre (42) dans le coupleur supérieur (40) est physiquement bloqué, dans lequel le coupleur supérieur (40) est fixé au coupleur inférieur (32) par l'intermédiaire d'une fermeture à encliquetage (34), et dans lequel le coupleur supérieur (40) est fixé à la première extrémité (22) de tube externe par l'intermédiaire d'une fermeture à encliquetage (34.1) ;
l'axe de pivotement (44) connectant le coupleur supérieur (40) et le coupleur inférieur (32).

2. Tube télescopique verrouillable (10) selon la revendication 1, dans lequel le bloc de friction (52) comprend du caoutchouc.

3. Tube télescopique verrouillable (10) selon l'une quelconque des revendications précédentes, dans lequel le verrou à pression (50) comprend du plastique.

4. Tube télescopique verrouillable (10) selon l'une quelconque des revendications précédentes, dans lequel le verrou à pression (50) comprend une protubérance (54), dans lequel la protubérance (54) entre en contact avec le bloc de friction (52) lorsque le verrou à pression (50) est fermé, et dans lequel la protubérance (54) n'entre pas en contact avec le bloc de friction (52) lorsque le verrou à pression (50) est ouvert.

5. Tube télescopique verrouillable (10) selon l'une quelconque des revendications précédentes, dans lequel le verrou à pression (50) comprend un trou de verrouillage (58), et dans lequel l'axe de pivotement (44) s'étend à travers le trou de verrouillage (58).

6. Tube télescopique verrouillable (10) selon la revendication 4, dans lequel la protubérance (54) presse le bloc de friction (52) lorsque le verrou à pression (50) est fermé.

7. Outil de taille comprenant le tube télescopique verrouillable (10) selon l'une quelconque des revendications précédentes, et éventuellement, dans lequel l'outil de taille est un taille-bordure.
